# FASCICULE DE BREVET EUROPEEN

(11) **EP 2 769 246 B1**
(45) Date de publication et mention de la délivrance du brevet: **06.01.2016**
(21) Numéro de dépôt: 12775250.9
(22) Date de dépôt: 19.10.2012
(51) Int. Cl.: G02B 5/08, C03C 17/00, C03C 17/36, C23C 28/00

(54) **MIROIR**
SPIEGEL
MIRROR

(30) Priorité: 21.10.2011 BE 201100615
(43) Date de publication de la demande: 27.08.2014
(73) Titulaire: AGC Glass Europe, 1348 Louvain-la-Neuve (BE)
(72) Inventeur: BOUCHER, Nicolas, B-6040 Jumet (BE); CLEMENT, Nicolas, B-6040 Jumet (BE); COSIJNS, Bruno, B-6040 Jumet (BE); LAMBRICHT, Thomas, B-6040 Jumet (BE); DE MAEYER, Barbara, B-1428 Lillois-Witterzee (BE); PROOST, Joris, 3010 Kessel-Lo (BE)
(74) Mandataire: Larangé, Françoise
(86) Numéro de dépôt international: PCT/EP2012/070766
(87) Numéro de publication internationale: WO 2013/057256

(56) Documents cités:
- FR-A1- 2 719 839
- US-A1- 2007 030 568

## Description

La présente invention a trait à des miroirs et des méthodes de fabrication de tels miroirs.

Les miroirs selon cette invention peuvent avoir diverses applications, par exemple: miroirs domestiques utilisés entre autre dans des meubles, garde-robes ou salles-de-bain; miroirs pour boîtes de maquillage ou poudriers; miroirs utilisés dans l'industrie automobile, comme rétroviseurs de véhicules par exemple. Mais cette invention peut être particulièrement avantageuse pour des miroirs utilisés comme réflecteurs d'énergie solaire.

Les miroirs selon la présente invention peuvent être utilisés en tant que réflecteurs dans des centrales thermiques solaires. De telles installations utilisent l'énergie solaire pour produire dans un premier temps de la chaleur, qui ensuite peut être convertie en électricité ou être utilisée pour la production de vapeur. Les centrales thermiques solaires dans lesquelles des miroirs selon la présente invention peuvent être utilisés comprennent, par exemple, les centrales à réflecteurs cylindro-paraboliques, les centrales de type "dish", les centrales à tour, les centrales de type Fresnel et les centrales à réflecteurs paraboliques. Les miroirs selon la présente invention peuvent être utilisés comme réflecteurs plats ou incurvés.

Des miroirs domestiques et miroirs pour applications solaires sont souvent produits par des procédés de chimie par voie humide ("wet-chemistry"). Ainsi, généralement, des miroirs sont produits selon le procédé suivant: une feuille de verre plat (verre flotté, sodo-calcique) est d'abord polie et rincée, puis, sensibilisée au moyen d'une solution de chlorure d'étain; après rinçage, une couche d'argent est déposée par réaction de réduction d'une solution ammoniacale de nitrate d'argent. Cette couche d'argent est ensuite recouverte d'une couche protectrice de cuivre. Après séchage, une ou plusieurs couches de peinture contenant du plomb sont déposées afin de produire le miroir fini. Il était généralement admis que la combinaison de la couche protectrice de cuivre et de la peinture contenant du plomb était nécessaire pour fournir au miroir des caractéristiques de vieillissement acceptables et une résistance à la corrosion suffisante.

Plus récemment, des miroirs ont été développés qui ne nécessitaient plus la traditionnelle couche protectrice de cuivre, qui pouvaient utiliser des peintures substantiellement sans plomb et qui montraient pourtant des caractéristiques de vieillissement et une résistance à la corrosion acceptables, voire même meilleures. Par exemple, le brevet français FR2719839 décrit des modes de réalisations de miroirs sans couche de cuivre comprenant les étapes suivantes: traitement de la surface du verre avec du chlorure d'étain (sensibilisation) et du chlorure de palladium (activation); rinçage; formation de la couche d'argent; rinçage; traitement de la surface argentée avec du chlorure d'étain (passivation); rinçage et séchage; application d'au moins une couche de peinture. Cette nouvelle génération de miroirs a marqué une belle avancée au regard des miroirs traditionnels avec cuivre.

Une des propriétés très importantes pour un miroir pour application solaire est sa capacité à réfléchir les rayons du soleil, qui est déterminante pour le rendement de la centrale solaire dans laquelle il est installé. En fonctionnement, les rayons du soleil traversent une première fois le substrat en verre du miroir, sont réfléchis sur la couche d'argent, puis traversent une seconde fois le substrat en verre. Pour augmenter les propriétés réflectrices de miroirs solaires, il est connu d'utiliser des feuilles de verre plus fines comme substrat pour les miroirs ou d'utiliser du verre extra-clair, c'est-à-dire un verre avec un contenu total en fer, exprimé en tant que Fe₂O₃, de moins de 0.02 % poids, diminuant ainsi l'effet absorbant du verre à l'égard du rayonnement solaire. Il est également connu d'augmenter la quantité d'argent présente dans la couche réflectrice d'argent: une quantité d'argent aux alentours de 1200-1500 mg/m² peut s'avérer un bon compromis entre de bonnes valeurs de réflexions et un coût acceptable de production. Il a également été proposé des miroirs dont le substrat présente une strate supérieure du côté de la couche d'argent enrichie en argent, sur une épaisseur préférée entre 130 et 700 nm.

D'un autre côté, des miroirs à haute réflexion sont aussi fabriqués par dépôt physique en phase vapeur ("PVD: physical vapour déposition"). Ils se distinguent des miroirs par voie humide par leur texture cristallographique de l'argent, en particulier par le fait que l'orientation cristallographique (111) au sein de la couche d'argent est très nettement dominante par rapport à l'orientation (200), résultant en un rapport d'intensité (111)/(200) supérieur à 10, généralement supérieur à 20; alors que les miroirs par voie humide présentent un rapport (111)/(200) inférieur à 5. Cependant, les miroirs par PVD présentent l'inconvénient d'un procédé de plus grande complexité et ne montrent généralement pas une durabilité suffisante, en particulier pour application solaire.

Or, l'industrie des miroirs solaires est toujours en quête de performances accrues en termes de réflexion lumineuse et énergétique, tout en souhaitant des miroirs à plus longue durée de vie possible.

Selon un de ses aspects, la présente invention a pour objet un miroir selon la revendication 1, les revendications dépendantes présentant des modes de réalisation préférés.

L'invention porte sur un miroir comprenant un substrat en verre recouvert d'une couche d'argent, elle-même recouverte d'au moins une couche de peinture, dans lequel le rapport d'intensité des orientations cristallographiques (111)/(200) au sein de la couche d'argent est inférieur à 5.0. Il se caractérise par le fait que la couche d'argent présente une longueur de corrélation (111) (CLz), mesurée par diffraction des rayons X en appliquant la méthode de Scherrer (c'est-à-dire en utilisant l'équation de Scherrer), supérieure à 27.0 nm.

De tels miroirs, fabriqués par voie humide, ont l'avantage de présenter une réflexion lumineuse et/ou une réflexion énergétique plus élevée(s) que celle(s) d'un miroir de fabrication identique (entre autre, même composition et épaisseur du substrat en verre, même quantité d'argent sur le verre), mais dont la couche d'argent présente une cristallinité définie par une longueur de corrélation (111) (CLz) inférieure. De plus cette amélioration des propriétés de réflexion du miroir ne se fait pas au détriment d'autres propriétés importantes, par exemple la résistance du miroir à la corrosion et/ou au vieillissement.

Nous avons ainsi découvert que des valeurs de réflexion plus élevées sont obtenues lorsque la longueur de corrélation des cristallites (grains) d'argent d'orientation cristallographique (111) augmente, toutes autres choses étant égales par ailleurs.

Selon des modes de réalisations préférés de l'invention, la couche d'argent présente une longueur de corrélation (111) (CLz) supérieure à 27.5, à 28.0, à 28.5, à 29.0 ou à 29.5 nm, plus préférentiellement encore supérieure à 30.0, à 30.5 ou à 31.0 nm. La CLz peut être, par exemple, inférieure à 60.0, à 50.0 ou à 45.0 nm. Des valeurs de CLz dans ces gammes permettent des augmentations de réflexion énergétique allant jusqu'à 2 % par comparaison avec des miroirs de l'art antérieur présentant des CLz inférieures.

La longueur de corrélation (111) (CLz) est calculée sur base des pics de diffraction de Bragg obtenus lors d'une mesure de diffraction des rayons X effectuée en configuration géométrique Bragg-Brentano. La longueur de corrélation (CL) est en effet directement liée à la largeur à mi-hauteur du pic par la relation ou "équation" de Scherrer :
CL = 0.9λ/βcosθ
avec β la largeur à mi-hauteur et λ la longueur d'onde.

Le rapport d'intensité des orientations cristallographiques (111)/(200) est calculé en divisant le nombre de coups/seconde maximum du pic correspondant à l'orientation (111) dans le spectre de diffraction des rayons X, par le nombre de coups/seconde maximum correspondant à l'orientation (200).

Avantageusement, la couche d'argent est formée sur un substrat en verre plat, flotté, de préférence un verre extra-clair, c'est-à-dire un verre avec un contenu total en fer, exprimé en tant que Fe₂O₃, de moins de 0.02 % poids. Le verre extra-clair favorise de bonnes valeurs de réflexion.

De préférence, la quantité d'argent déposée sur le verre est supérieure ou égale à 800 mg/m², 1000 mg/m², 1200 mg/m² ou 1400 mg/m²; elle est de préférence inférieure à 2000 mg/m², 1800 mg/m², 1600 mg/m² ou 1500 mg/m². L'épaisseur de la couche d'argent peut être supérieure ou égale à 65 nm, 70 nm, 80 nm, 90 nm, 100 nm, 110 nm, 120 nm, 130 nm ou 140 nm; elle peut être inférieure à 200 nm, 180 nm, 160 nm ou 150 nm. Ces valeurs offrent un bon compromis entre de bonnes valeurs de réflexions et un coût acceptable de production.

Selon des modes de réalisations préférés de l'invention, la couche d'argent présente des grains d'argent dont la taille moyenne se situe entre 10 nm et 200 nm, de préférence entre 20 nm et 120 nm. La détermination de cette taille moyenne de grains peut être faite par observations de la surface de la couche d'argent par SEM-FEG (scanning electron microscope with field emission guns).

La présente invention peut s'appliquer à des miroirs ayant une couche protectrice de cuivre entre la couche d'argent et la ou les couche(s) de peinture, ou n'en ayant pas. Les miroirs sans couche de cuivre peuvent être avantageux pour l'environnement.

Selon certains modes de réalisation avantageux de l'invention, un ou plusieurs matériaux peuvent être déposés durant une étape d'activation de la surface du verre sur laquelle la couche d'argent doit être déposée; ceci peut contribuer à la résistance au vieillissement et/ou à la corrosion des miroirs et/ou à leur durabilité. Ce ou ces matériaux peuvent être sélectionnés dans le groupe d'éléments consistant en bismuth, chrome, or, indium, nickel, palladium, platine, rhodium, ruthénium, titane, vanadium et zinc. Le palladium est généralement préféré.

De l'étain peut être déposé durant une étape de sensibilisation de la surface du verre sur laquelle la couche d'argent doit être déposée; ceci peut contribuer à la bonne adhérence de la couche d'argent au verre.

Avantageusement le miroir selon l'invention comprend de l'étain et du palladium présents à la surface du substrat du côté de la couche d'argent.

De préférence, un ou plusieurs matériaux peuvent être déposés durant une étape de passivation de la surface de la couche d'argent sur laquelle doit être déposée la peinture; ceci peut contribuer à la résistance au vieillissement et/ou à la corrosion des miroirs et/ou à leur durabilité. Ce ou ces matériaux peuvent être sélectionnés dans le groupe d'éléments consistant en étain, palladium, vanadium, titane, fer, indium, cuivre, aluminium, chrome, lanthane, nickel, europium, zinc, platine, ruthénium, rhodium, sodium, zirconium, yttrium et cérium. L'étain ou le palladium sont généralement préférés.

Les matériaux déposés à la surface du verre durant l'activation et/ou la sensibilisation et/ou déposés à la surface de l'argent durant la passivation, sont préférentiellement déposés en tant qu"'îlots"; ceci pour dire qu'ils ne forment pas une couche distincte et continue, mais qu'ils se retrouvent de manière discontinue sur la surface qu'ils traitent.

De manière avantageuse, un traitement de la couche d'argent avec un silane peut être effectué avant le dépôt de peinture. La présence de traces de silane à la surface de la couche d'argent du côté de la ou les couche(s) de peinture peut contribuer à la résistance du miroir aux sollicitations mécaniques et/ou à la corrosion.

La peinture recouvrant la couche d'argent est de préférence sans plomb ou substantiellement sans plomb. Ceci peut être avantageux pour l'environnement. "Substantiellement sans plomb" signifie que la proportion en plomb dans la peinture est significativement moindre que la proportion en plomb de peintures contenant du plomb couramment utilisées dans la fabrication de miroirs. La proportion en plomb d'une peinture substantiellement sans plomb telle que définie ici est inférieure à 500 mg/m², préférentiellement inférieure à 400 mg/m² ou de préférence encore inférieure à 300 mg/m². La proportion en plomb d'une peinture sans plomb telle que définie ici est inférieure à 100 mg/m², préférentiellement inférieure à 80 mg/m² ou de préférence encore inférieure à 60 mg/m². Les peintures utilisées peuvent être de type acrylique, epoxy, alkyd ou polyurethane. Elles peuvent être appliquées, par exemple, par rouleau ou rideau. La peinture recouvrant la couche d'argent peut être déposée en une seule étape, résultant en une mono-couche de peinture, ou en plusieurs étapes, résultant en deux ou trois couches de peinture. Lorsque plusieurs couches de peinture recouvrent l'argent, elles peuvent être de compositions identiques ou différentes.

Les miroirs selon par la présente invention peuvent avoir une réflexion lumineuse selon la norme ISO 9050:2003 (mesurée à travers la surface du verre, avec un angle d'incidence de 8° par rapport à la normale, sous illuminant D65) supérieure ou égale à 85%, 90%, 91%, 92%, 93%, 94% ou 95%. Les miroirs obtenus par la présente invention peuvent avoir une réflexion énergétique selon la norme ISO 9050:2003 (mesurée à travers la surface du verre, avec un angle d'incidence de 8° par rapport à la normale) supérieure ou égale à 82%, 84%, 85% ou 86% sur verre clair ou supérieure ou égale à 90%, 92% ou 93% sur verre extra-clair.

Les miroirs selon la présente invention peuvent être dits "minces" et servir par exemple pour des applications solaires nécessitant des réflecteurs courbes; ils ont par exemple une épaisseur supérieure à 0.8 mm, 0.9 mm ou 1.1 mm et/ou inférieure à 2 mm ou 1.5 mm, par exemple une épaisseur d'environ 0.95 ou 1.25 mm. Ils peuvent aussi être plus épais, par exemple pour des applications solaires à réflecteurs plats, et avoir par exemple une épaisseur supérieure à 2 mm ou 2.5 mm et/ou inférieure à 6 mm ou 5 mm.

Des miroirs selon l'invention sont fabriqués par des procédés de chimie par voie humide. En pratique, par exemple, sur une ligne de production de miroirs, les feuilles de verre sont généralement transportées le long de la ligne par des convoyeurs à rouleaux. Elles sont tout d'abord polies et rincées avant d'être sensibilisées par exemple au moyen d'une solution de chlorure d'étain pulvérisée sur le verre; elles sont alors rincées à nouveau. Une solution d'activation est ensuite pulvérisée sur les feuilles de verre; cette solution peut être par exemple une solution aqueuse acide de PdCl₂. Les feuilles de verre passent ensuite dans une station de rinçage où de l'eau déminéralisée est pulvérisée et, ensuite, dans la station d'argenture ou une solution traditionnelle d'argenture est pulvérisée, cette solution étant le résultat à la surface du verre d'une combinaison de deux solutions pulvérisées séparément, l'une comprenant un sel d'argent et soit un agent réducteur soit une base, l'autre comprenant soit l'agent réducteur soit la base qui est absent de la solution comprenant le sel d'argent. Le débit et la concentration de la solution d'argenture pulvérisée sur le verre sont contrôlés de manière à former une couche d'argent d'épaisseur souhaitée. Le verre est alors rincé et directement ensuite, une solution aqueuse de, par exemple, SnCl₂ est pulvérisée sur les feuilles de verre alors qu'elles avancent le long du convoyeur. Après un autre rinçage, les miroirs peuvent être traités par pulvérisation d'une solution contenant un silane. Après un dernier rinçage, les feuilles de verre argentées entrent dans une station de séchage. Les miroirs sont ensuite recouverts d'une ou plusieurs couche(s) de peinture. Chaque couche de peinture est cuite ou séchée avant le dépôt d'une éventuelle autre couche de peinture, par exemple dans un four tunnel. De préférence, la peinture est appliquée sur les substrats argentés sous forme d'un rideau continu de peinture liquide tombant sur les feuilles de verre.

Dans un autre mode de réalisation, après le dépôt de la couche d'argent, le verre est rincé et directement ensuite, un sel de cuivre et un agent réducteur sont pulvérisés pour former à la surface du verre une couche de cuivre. Après un autre rinçage, les feuilles de verre argentées et cuivrées entrent dans une station de séchage, et le procédé se poursuit par le dépôt d'une ou plusieurs couche(s) de peinture.

Pour fabriquer un miroir à couche d'argent présentant une CLz supérieure à 27.0 nm, plusieurs adaptations différentes peuvent être apportées à ces procédés généraux, individuellement ou de manière combinée.

L'une d'entre elles consiste à adapter les solutions pulvérisées à l'étape d'argenture. Ainsi, nous avons trouvé qu'en sélectionnant les solutions de certains fournisseurs seulement, nous pouvions obtenir des valeurs de CLz supérieures.

Une autre consiste à régler le système de pulvérisation des solutions d'argenture (les sprays), en particulier la taille des gouttes et l'orientation des sprays.

Une autre encore consiste à augmenter la température de l'étape de séchage de la couche d'argent ou d'allonger cette étape.

Enfin, une autre possibilité est de fabriquer le miroir sur un verre recouvert d'une couche de contrôle de germination des cristaux d'argent, par exemple une couche diélectrique mince cristallisée d'oxyde ou de nitrure métallique de quelques nm à peine.

Bien sûr, il est difficile de préciser ou de chiffrer ici ces tendances de manière plus pointue, car chaque ligne de fabrication de miroir est différente et a ses spécificités. Néanmoins, en jouant sur ces quelques paramètres ici bien définis, l'homme de l'art pourra sur sa ligne atteindre de telles valeurs de CLz par quelques essais-erreurs, sans devoir déployer des efforts excessifs, car les mesures de CLz sont faciles à réaliser et assez routinières et il pourra ainsi très facilement dégager des tendances à suivre pour voir ses valeurs de CLz augmenter.

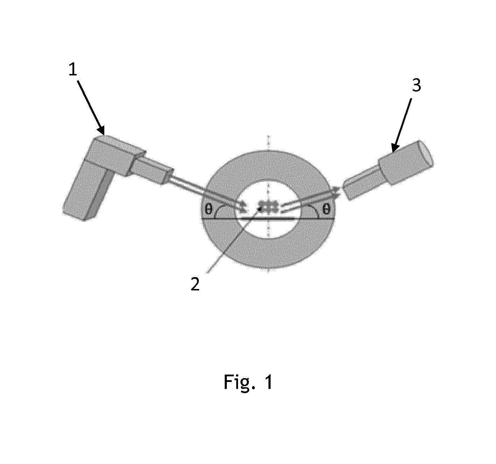

Des modes de réalisation particuliers de l'invention vont à présent être décrits, en tant qu'exemples, accompagnés de la Figure 1. Celle-ci représente schématiquement un système de diffraction des rayons X, tel qu'utilisé pour mesurer la longueur de corrélation (111) (CLz) et le rapport d'intensité des orientations cristallographiques (111)/(200). Des exemples comparatifs, ne formant pas part de l'invention, sont également présentés. Les données relatives à ces exemples et exemples comparatifs sont présentés dans la Table I.

### Exemples 1-3 & exemples comparatifs 1-3

Dans tous les exemples qui suivent, Les mesures XRD ont été effectuées à l'aide d'un diffractomètre D8-advance (Bruker), utilisé en géométrie de Bragg-Brentano (voir Figure 1). La fourchette d'angles mesurés s'étend de 5° à 70°, par pas de 0.009° en 2θ. Le pas de temps est de 0.2 s. Un tube de cuivre (1) (λ Kα₁ = 1.5415 Å) et un détecteur scintillateur (3) sont en outre utilisés. L'échantillon (2) est mis en rotation à 30 rpm afin de mesurer correctement les orientations préférentielles par rapport à la verticale.

Les exemples 1 à 3 et les exemples comparatifs 1 à 3 sont des miroirs comprenant un substrat de verre "float" de 4 mm d'épaisseur, de composition de type verre clair (exemples 1 et comparatif 1) ou extra-clair, c'est-à-dire avec un contenu total en fer, exprimé en tant que Fe₂O₃, de moins de 0.02 % poids (exemples 2 et 3 et comparatifs 2 et 3). Tous les exemples comportent une quantité d'argent de 1400 mg/m²; c'est le cas également des exemples comparatifs.

Les exemples 1 et comparatif 1 sont des miroirs avec couche de cuivre, tandis que les exemples 2 et 3 et comparatifs 2 et 3 sont des miroirs sans couche de cuivre.

Les miroirs selon les exemples 1a/2a, 1b/2b et 1c/2c ont subi un séchage de la couche d'argent à des températures respectivement de 250°C, 350°C et 400°C, pendant environ 5-10 minutes. Les exemples comparatifs 1/2 ont subi un séchage à environ 60°C pendant une minute.

Les miroirs selon l'exemple 3 et l'exemple comparatif 3 ne diffèrent que par les solutions d'argenture qui proviennent de deux fournisseurs différents.

Les valeurs de réflexion lumineuse (RL) et de réflexion énergétique (RE) des miroirs sont données dans la Table I. On peut ainsi voir que les CLz supérieures des exemples selon l'invention permettent d'atteindre des niveaux de RL et RE supérieurs.

**TABLE I**

| | CLz [Å] | (111)/(200) | RE [%] | RL [%] |
|---|---|---|---|---|
| exemple 1a | 274 | 2,00 | 84,15 | 92,15 |
| exemple 1b | 316 | 2,10 | 84,23 | 92,25 |
| exemple 1c | 301 | 2,00 | 84,15 | 92,14 |
| comparatif 1 | 198 | 1,90 | 83,55 | 91,45 |
| | | | | |
| exemple 2a | 326 | 2,55 | 92,32 | 93,91 |
| exemple 2b | 342 | 2,51 | 92,96 | 94,93 |
| exemple 2c | 373 | 2,44 | 92,54 | 94,27 |
| comparatif 2 | 218 | 2,83 | 91,32 | 92,73 |
| | | | | |
| exemple 3a | 294 | 3,02 | 94,06 | 95,88 |
| comparatif 3 | 254 | 3,17 | 92,83 | 94,28 |

## Revendications

1. Miroir comprenant un substrat en verre recouvert d'une couche d'argent, elle-même recouverte d'au moins une couche de peinture, dans lequel le rapport d'intensité des orientations cristallographiques (111)/(200) au sein de la couche d'argent est inférieur à 5.0, **caractérisé en ce que** la couche d'argent présente une longueur de corrélation (111) (CLz), mesurée par diffraction des rayons X en appliquant la méthode de Scherrer, supérieure à 27.0 nm.

2. Miroir selon la revendication 1, **caractérisé en ce que** la couche d'argent présente une longueur de corrélation (111) (CLz) supérieure à 28.0 nm.

3. Miroir selon la revendication 1 ou la revendication 2, **caractérisé en ce que** la couche d'argent présente une longueur de corrélation (111) (CLz) supérieure à 30.0 nm.

4. Miroir selon l'une des revendications précédentes, **caractérisé en ce que** le substrat est un verre avec un contenu total en fer, exprimé en tant que Fe₂O₃, de moins de 0.02 % poids.

5. Miroir selon l'une des revendications précédentes, **caractérisé en ce que** la couche d'argent a une épaisseur comprise entre 70 et 150 nm.

6. Miroir selon l'une des revendications précédentes, **caractérisé en ce qu'**il est dépourvu de couche de cuivre.

7. Miroir selon l'une des revendications précédentes, **caractérisé en ce qu'**il comprend de l'étain présent à la surface du substrat du côté de la couche d'argent.

8. Miroir selon l'une des revendications précédentes, **caractérisé en ce qu'**il comprend au moins un élément sélectionné dans le groupe consistant en bismuth, chrome, or, indium, nickel, palladium, platine, rhodium, ruthénium, titane, vanadium et zinc, présent à la surface du substrat du côté de la couche d'argent.

9. Miroir selon l'une des revendications précédentes, **caractérisé en ce qu'**il comprend de l'étain et du palladium présents à la surface du substrat du côté de la couche d'argent.

10. Miroir selon l'une des revendications précédentes, **caractérisé en ce qu'**il comprend au moins un élément sélectionné dans le groupe consistant en étain, palladium, vanadium, titane, fer, indium, cuivre, aluminium, chrome, lanthane, nickel, europium, zinc, platine, ruthénium, rhodium, sodium, zirconium, yttrium et cérium, présent à la surface de la couche d'argent du côté de la au moins une couche de peinture.

11. Miroir selon l'une des revendications précédentes, **caractérisé en ce qu'**il comprend de l'étain présent à la surface de la couche d'argent du côté de la au moins une couche de peinture.

12. Miroir selon l'une des revendications précédentes, **caractérisé en ce qu'**il comprend des traces de silane présentes à la surface de la couche d'argent du côté de la au moins une couche de peinture.

## Patentansprüche

1. Spiegel, umfassend ein Substrat aus Glas, das mit einer Silberschicht überzogen ist, die selbst mit mindestens einer Farbschicht überzogen ist, wobei das Intensitätsverhältnis der kristallographischen Ausrichtungen (111)/(200) innerhalb der Silberschicht geringer als 5,0 ist, **dadurch gekennzeichnet, dass** die Silberschicht eine Korrelationslänge (111) (CLz), gemessen durch Brechung der Röntgenstrahlen unter Anwendung der Scherrer-Methode, von über 27,0 nm aufweist.

2. Spiegel nach Anspruch 1, **dadurch gekennzeichnet, dass** die Silberschicht eine Korrelationslänge (111) (CLz) von über 28,0 nm aufweist.

3. Spiegel nach Anspruch 1 oder Anspruch 2, **dadurch gekennzeichnet, dass** die Silberschicht eine Korrelationslänge (111) (CLz) von über 30,0 nm aufweist.

4. Spiegel nach einem der vorhergehenden Ansprüche, **dadurch gekennzeichnet, dass** das Substrat ein Glas mit einem Gesamteisengehalt, ausgedrückt als Fe2O3, von weniger als 0,02 Gew.-% ist.

5. Spiegel nach einem der vorhergehenden Ansprüche, **dadurch gekennzeichnet, dass** die Silberschicht eine Dicke zwischen 70 und 150 nm hat.

6. Spiegel nach einem der vorhergehenden Ansprüche, **dadurch gekennzeichnet, dass** er keine Kupferschicht umfasst.

7. Spiegel nach einem der vorhergehenden Ansprüche, **dadurch gekennzeichnet, dass** er Zinn umfasst, das an der Oberfläche des Substrats auf der Seite der Silberschicht vorhanden ist.

8. Spiegel nach einem der vorhergehenden Ansprüche, **dadurch gekennzeichnet, dass** er mindestens ein Element umfasst, das aus der Gruppe ausgewählt ist, umfassend Wismut, Chrom, Gold, Indium, Nickel, Palladium, Platin, Rhodium, Ruthenium, Titan, Vanadium und Zink, das an der Oberfläche des Substrats auf der Seite der Silberschicht vorhanden ist.

9. Spiegel nach einem der vorhergehenden Ansprüche, **dadurch gekennzeichnet, dass** er Zinn und Palladium umfasst, die an der Oberfläche des Substrats auf der Seite der Silberschicht vorhanden sind.

10. Spiegel nach einem der vorhergehenden Ansprüche, **dadurch gekennzeichnet, dass** er mindestens ein Element umfasst, das aus der Gruppe ausgewählt ist, umfassend Zinn, Palladium, Vanadium, Titan, Eisen, Indium, Kupfer, Aluminium, Chrom, Lanthan, Nickel, Europium, Zink, Platin, Ruthenium, Rhodium, Natrium, Zirkon, Yttrium und Cerium, die an der Oberfläche der Silberschicht auf der Seite der mindestens einen Farbschicht vorhanden sind.

11. Spiegel nach einem der vorhergehenden Ansprüche, **dadurch gekennzeichnet, dass** er Zinn umfasst, das an der Oberfläche der Silberschicht auf der Seite der mindestens einen Farbschicht vorhanden ist.

12. Spiegel nach einem der vorhergehenden Ansprüche, **dadurch gekennzeichnet, dass** er Spuren von Silan umfasst, die an der Oberfläche der Silberschicht auf der Seite der mindestens einen Farbschicht vorhanden sind.

## Claims

1. Mirror comprising a glass substrate covered with a silver layer, itself covered with at least one coat of paint, wherein the intensity ratio of the (111)/(200) crystallographic orientations within the silver layer is lower than 5.0, **characterized in that** the silver layer has a (111) correlation length (CLz), measured by X-ray diffraction analyzed using the Scherrer method, greater than 27.0 nm.

2. Mirror according to Claim 1, **characterized in that** the silver layer has a (111) correlation length (CLz) greater than 28.0 nm.

3. Mirror according to Claim 1 or Claim 2, **characterized in that** the silver layer has a (111) correlation length (CLz) greater than 30.0 nm.

4. Mirror according to one of the preceding claims, **characterized in that** the substrate is made of a glass having a total iron content, expressed in terms of Fe₂O₃, of less than 0.02% by weight.

5. Mirror according to one of the preceding claims, **characterized in that** the silver layer has a thickness comprised between 70 and 150 nm.

6. Mirror according to one of the preceding claims, **characterized in that** it is devoid of copper layer.

7. Mirror according to one of the preceding claims, **characterized in that** it comprises tin present on the surface of the substrate on the same side as the silver layer.

8. Mirror according to one of the preceding claims, **characterized in that** it comprises at least one element selected from the group consisting of bismuth, chromium, gold, indium, nickel, palladium, platinum, rhodium, ruthenium, titanium, vanadium and zinc, present on the surface of the substrate on the same side as the silver layer.

9. Mirror according to one of the preceding claims, **characterized in that** it comprises tin and palladium present on the surface of the substrate on the same side as the silver layer.

10. Mirror according to one of the preceding claims, **characterized in that** it comprises at least one element selected from the group consisting in tin, palladium, vanadium, titanium, iron, indium, copper, aluminium, chromium, lanthanum, nickel, europium, zinc, platinum, ruthenium, rhodium, sodium, zirconium, yttrium and cerium, present on the surface of the silver layer on the same side as the at least one coat of paint.

11. Mirror according to one of the preceding claims, **characterized in that** it comprises tin present on the surface of the silver layer on the same side as the at least one coat of paint.

12. Mirror according to one of the preceding claims, **characterized in that** it comprises traces of silane, present on the surface of the silver layer on the same side as the at least one coat of paint.
